# EUROPÄISCHE PATENTSCHRIFT

(11) **EP 3 742 026 B1**
(45) Veröffentlichungstag und Bekanntmachung des Hinweises auf die Patenterteilung: **21.12.2022**
(21) Anmeldenummer: 20155767.5
(22) Anmeldetag: 06.02.2020
(51) Int. Cl.: F16H 61/02

(54) **ANTRIEBSSTRANG EINES FAHRZEUGS SOWIE VERFAHREN ZUM BETREIBEN EINES ANTRIEBSSTRANGES EINES FAHRZEUGS**
DRIVE TRAIN OF A VEHICLE AND METHOD FOR OPERATING A DRIVE TRAIN OF A VEHICLE
GROUPE MOTOPROPULSEUR D'UN VEHICULE ET PROCEDE DE FONCTIONNEMENT D'UN GROUPE MOTOPROPULSEUR D'UN VEHICULE

(30) Priorität: 21.05.2019 DE 102019113452
(43) Veröffentlichungstag der Anmeldung: 25.11.2020
(73) Patentinhaber: CLAAS Tractor S.A.S., 78141 Vélizy-Villacoublay Cedex (FR)
(72) Erfinder: Mörsch, Claus, 33449 Langenberg (DE); Rüther, Friedrich, 33330 Gütersloh (DE); Schütte, Robin, 33142 Büren (DE); Reuter, Heiner, 06456 Arnstein (DE); Nivot, Xavier, 92350 Le Plessis Robinson (FR)
(74) Vertreter: CLAAS Gruppe

(56) Entgegenhaltungen:
- EP-A2- 1 134 458
- WO-A1-2011/134704
- DE-T5-112014 000 363
- JP-A- H0 763 252
- JP-A- 2008 290 558
- JP-A- 2010 096 215

## Beschreibung

Die vorliegende Erfindung betrifft einen Antriebsstrang eines landwirtschaftlichen Nutzfahrzeugs gemäß dem Oberbegriff des Anspruches 1. Weiterhin betrifft die vorliegende Erfindung ein Verfahren zum Betreiben eines Antriebsstranges eines landwirtschaftlichen Nutzfahrzeugs gemäß dem Oberbegriff des Anspruches 10.

Ein Antriebsstrang eines landwirtschaftlichen Nutzfahrzeugs, besonders bevorzugt ein Antriebsstrang eines Traktors, umfasst eine Antriebsmaschine, der insbesondere als ein Verbrennungsmotor ausgeführt ist, und ein Lastschaltgetriebe mit wenigstens zwei Gruppenschaltstufen, denen jeweils mehrere Lastschaltstufen zugeordnet sind, die durch ein schaltbares Anfahrelement verbindbar und trennbar sind. Bei einer Unterbrechung des Antriebsstrangs durch das Anfahrelement ist eine Vorgabe eines Anfahrganges notwendig, um das Fahrzeug aus dem Stillstand heraus anzufahren.

Insbesondere bei schweren Fahrzeugen mit vielgängigen Lastschaltgetrieben sind verschiedene Lastschaltstufen innerhalb einer Gruppenschaltstufe zum Anfahren geeignet, von denen beladungs- und fahrzustandsabhängig eine Lastschaltstufe als Anfahrgang gewählt wird. Beispielsweise kann es bei einem unbeladenen Nutzfahrzeug mit einem 16-Gang-Getriebe auf ebener Strecke für ein optimales Fortkommen vorteilhaft sein, den fünften Gang als Anfahrgang zu wählen, während es bei voll beladenem Fahrzeug in einer Steigungsstrecke erforderlich sein kann, im ersten oder zweiten Gang anzufahren. Wird in einer Fahrsituation ein zu kleiner Anfahrgang gewählt, hat dies unnötig viele Gangwechsel zur Folge. Wird der Anfahrgang zu groß gewählt, dauert der Anfahrvorgang mit der Folge einer höheren Belastung des Anfahrelementes länger oder muss gar wieder abgebrochen werden, wenn die zur Verfügung stehende Zugkraft im gewählten Anfahrgang nicht ausreichend ist. Die Einschätzung der Fahrsituation, beispielsweise ob ein beladener oder unbeladener Anhänger angekoppelt ist, obliegt in der Regel der Bedienperson des Fahrzeugs, da dem Fahrzeug respektive dem Lastschaltgetriebe diese Information nicht vorliegt. Üblicherweise ist nur ein Anfahrgang direkt schaltbar, was beim Rangieren oder unterschiedlichen Tätigkeiten nachteilig sein, kann, da die benötigten Übersetzungen mittels mehrerer von der Bedienperson des Fahrzeugs durchzuführender Bedienschritte eingelegt werden müssen.

Aus der DE 10 2008 002 440 A1 ist ein Verfahren zum Ansteuern eines automatischen Getriebes sowie eine Getriebesteuerung für ein Nutzfahrzeug bekannt, bei dem eine Fahrstrategie vorgegeben wird, welche in Abhängigkeit von einem mittels eines Ladungserkennungsmoduls aktuell ermittelten Ladungszustand des Nutzfahrzeugs verändert wird. Dabei wird der Anfahrgang in Abhängigkeit des ermittelten Ladungszustands automatisch verändert. Die Umsetzung des aus der DE 10 2008 002 440 A1 bekannten Verfahrens erfordert das Vorhandensein eines Ladungserkennungsmoduls, um auf eine Änderung des Ladezustands schließen zu können.

Die DE 10 2004 015 966 A1 beschreibt ein Verfahren zur automatisierten Anfahrgangbestimmung eines automatisierten Stufenwechselgetriebes. Bei dem Verfahren wird zur Bestimmung eines Anfahrganges die Fahrzeugmasse und die Fahrwegsteigung berücksichtigt. Beispielsweise kann ein höherer Anfahrgang dann benutzt werden, wenn die Fahrzeugmasse unter einem vorbestimmten Wert liegt. Die Fahrzeugmasse wird entweder im Betrieb des Fahrzeuges bestimmt oder abgeschätzt. Im Rahmen der Abschätzung der Fahrzeugmasse wird geprüft, ob die Dauer eines Fahrzeugstillstands kürzer ist, als ein die Fahrzeugmasse anfahrgangrelevant verändernder Ladevorgang am Fahrzeug dauern würde. Wenn dieser vorbestimmte Zeitraum verstrichen ist, so kann mit hoher Wahrscheinlichkeit davon ausgegangen werden, dass sich die Fahrzeugmasse durch einen Ladevorgang verändert hat. Die Abschätzung der Fahrzeugmasse ist jedoch relativ ungenau. Da auch die Berechnung der Fahrzeugmasse erst bei fahrendem Fahrzeug erfolgt, ist auch diese Art der Bestimmung der Fahrzeugmasse nicht ausreichend.

JP2010096215A, auf welche die zweiteilige Anspruchsfassung basiert, beschreibt ein weiteres Verfahren zum Ansteuern eines automatischen Getriebes für ein landwirtschaftliches Nutzfahrzeug.

Vor diesem Hintergrund liegt der Erfindung die Aufgabe zugrunde, einen Antriebsstrang eines Fahrzeugs sowie ein Verfahren zum Betreiben eines Antriebsstrangs eines Fahrzeugs derart weiterzubilden, dass es für eine Bedienperson des Fahrzeugs einfacher wird, gezielt einen geeigneten Anfahrgang auszuwählen, welcher der jeweiligen Fahrsituation am besten entspricht.

Diese Aufgabe wird aus vorrichtungstechnischer Sicht ausgehend vom Oberbegriff des Anspruchs 1 in Verbindung mit dessen kennzeichnenden Merkmalen gelöst. Aus verfahrenstechnischer Sicht erfolgt eine Lösung der Aufgabe durch die Merkmale des nebengeordneten Anspruchs 10. Die hierauf jeweils folgenden, abhängigen Ansprüche geben jeweils vorteilhafte Weiterbildungen der Erfindung wieder. Gemäß dem Anspruch 1 wird ein Antriebsstrang eines landwirtschaftlichen Nutzfahrzeugs, vorgeschlagen, mit einer Antriebsmaschine und einem Lastschaltgetriebe mit wenigstens zwei Gruppenschaltstufen, denen jeweils mehrere Lastschaltstufen zugeordnet sind, die durch ein schaltbares Anfahrelement verbindbar oder trennbar sind, wobei bei einer Unterbrechung des Antriebsstrangs durch das Anfahrelement eine Vorgabe eines Anfahrganges nur bei Stillstand des Fahrzeugs erfolgt. Die Vorgabe eines Anfahrgangs erfolgt nur bei detektiertem Stillstand des Fahrzeugs. Erfindungsgemäß ist vorgesehen, dass eine elektronische Schaltvorrichtung zur Ansteuerung des Lastschaltgetriebes vorgesehen ist, wobei in der Schaltvorrichtung mindestens zwei schaltbare Anfahrgänge änderbar hinterlegt sind und mittels einer Betätigung genau eines Vorwahlmittels auswählbar sind. Eine Bedienperson des Fahrzeugs hat somit die Möglichkeit, durch eine Betätigung des genau einen Vorwahlmittels auf einfachste Weise auf eine Auswahl von Anfahrgängen zuzugreifen, um den Anfahrgang fahrsituationsabhängig auszuwählen. Die Anfahrsituation wird durch die Bedienperson in der Regel schneller erfasst und erfordert weniger technischen Aufwand, als dies bei der automatisierten Erkennung gemäß dem Stand der Technik der Fall ist. Oftmals liegen Standardsituationen beim Anfahren vor, beispielsweise während eines Erntevorgangs auf einem Feld, wenn das Fahrzeug als Zugmaschine für einen Transportwagen eingesetzt wird. Dabei variieren die Fahrsituationen zwischen einem beladenen und einem unbeladenen Transportwagen sowie zwischen Straßenfahrt und Feldfahrt. Der erfindungsgemäß ausgeführte Antriebsstrang vereinfacht es, den für die jeweilige Fahrsituation geeignetsten Anfahrgang auswählen zu können, indem durch eine Betätigung des genau einen Vorwahlmittels auf eine hinterlegte Auswahl von Anfahrgängen zugegriffen wird, um den Anfahrgang fahrsituationsabhängig auszuwählen.

Die Trennung und die Wiederherstellung der Verbindung zwischen der Antriebsmaschine und dem Lastschaltgetriebe wird durch das zwischen der Antriebsmaschine und dem Lastschaltgetriebe sitzende Anfahrelement vollzogen. Bei dem Anfahrelement kann es sich um eine Trennkupplung handeln, durch die die mechanische Verbindung zwischen der Antriebsmaschine und dem Lastschaltgetriebe im geöffneten Zustand unterbrochen wird. Die Trennkupplung kann dabei als trockenlaufende oder auch als nasslaufende Reibungskupplung vorliegen.

Dabei kann die Auswahl eines der hinterlegten Anfahrgänge durch eine manuelle Betätigung eines als Bedienelement ausgeführten Vorwahlmittels erfolgen. Die Bedienperson kann durch die manuelle Betätigung des als Bedienelement ausgeführten Vorwahlelements einen Anfahrgang auswählen, wobei die Betätigung per Hand oder Fuß erfolgen kann.

Hierbei kann das Bedienelement ein Bedienschalter, ein Fahrhebel oder ein Fahrpedal des Fahrzeugs sein. In Abhängigkeit von der Ausgestaltung des Bedienelements können diesem in Abhängigkeit von der jeweiligen Fahrsituation auch mehrere unterschiedliche Funktionen zugeordnet sein. Beispielsweise kann der Fahrhebel als sogenannter Multifunktionshebel ausgeführt sein, an welchem zusätzliche Bedienelemente in Form von Schaltern und/oder Tastern angeordnet sind. Dabei kann eines der zusätzlichen Bedienelemente des als Multifunktionshebel ausgeführten Fahrhebels mit zumindest zwei unterschiedlichen Funktionen belegt sein, die jeweils nur in spezifischen Fahrsituationen zur Verfügung stehen. Eine spezifische Fahrsituation ist der Stillstand des Fahrzeugs, aus welchem angefahren werden soll.

Gemäß einer bevorzugten Weiterbildung kann die Auswahl eines der hinterlegten Anfahrgänge in Abhängigkeit von zumindest einem Betriebsparameter des Antriebsstranges erfolgen. Auf diese Weise kann die Auswahl des Anfahrganges aus der hinterlegten Auswahl automatisch Anfahrgänge in Abhängigkeit von dem zumindest einen Betriebsparameter durchgeführt werden.

Insbesondere kann ein Betriebsparameter ein auswählbarer Fahrgeschwindigkeitsbereich des Fahrzeugs sein. Bevorzugt können mehrere Fahrgeschwindigkeitsbereiche durch die Bedienperson individuell vorgegeben werden. Hierbei können die Fahrgeschwindigkeitsbereiche sowohl in Vorwärts- als auch in Rückwärtsfahrtrichtung frei eingestellt werden. Jedem der für eine der beiden Fahrtrichtungen voreingestellten Fahrgeschwindigkeitsbereiche kann ein spezifischer Anfahrgang zugeordnet werden, der dann automatisch ausgewählt wird, wenn die Bedienperson einen Fahrgeschwindigkeitsbereich für eine der beiden Fahrtrichtungen durch die Betätigung eines hierfür vorgesehenen Bedienmittels vorgibt. Die Vorgabe des Fahrgeschwindigkeitsbereichs durch die Bedienperson erfolgt unter Berücksichtigung einer bestehenden Fahrsituation, so dass sichergestellt werden kann, dass ein der Fahrsituation entsprechender Anfahrgang ausgewählt wird. Bei dieser Ausführungsform bildet das Bedienmittel zur Auswahl des Fahrgeschwindigkeitsbereichs implizit das Vorwahlmittel zur Auswahl des Anfahrgangs.

Erfindungsgemäß ist eine Steuerungsvorrichtung vorgesehen, mittels der die in der Schaltvorrichtung hinterlegten Anfahrgänge manipulierbar sind. Dabei kann die Steuerungsvorrichtung mittels eines Bussystems mit der Schaltvorrichtung in Verbindung stehen. Mittels der Steuerungsvorrichtung kann die Bedienperson die zur Auswahl stehenden Anfahrgänge anpassen, beispielsweise unter Berücksichtigung einer geänderten Betriebs- und Arbeitsbedingung. Soll beispielsweise an ein als Traktor ausgeführtes Fahrzeug ein Güllewagen angeschlossen werden, so stellen sich zumindest drei unterschiedliche Fahrsituationen ein, in denen unterschiedliche Anfahrgänge notwendig sind, um das Fahrzeug aus dem Stillstand heraus zu bewegen. Bei der Straßenfahrt mit vollem oder leerem Gülletank sind verschiedene Anfahrgänge notwendig, welche wiederum von dem bei Feldfahrt notwendigen Anfahrgang abweichen können. Die Bedienperson kann somit im Vorfeld auf die jeweilige Fahrsituation abgestimmt Anfahrgänge festlegen und in der Schaltvorrichtung hinterlegen. Diese lassen sich durch die Betätigung des Vorwahlmittels gezielt auswählen. Darüber hinaus kann die Bedienperson mittels der Steuerungsvorrichtung mehrere Fahrgeschwindigkeitsbereiche festlegen, so dass die Schaltvorrichtung in Abhängigkeit vom gewählten Fahrgeschwindigkeitsbereich einen Anfahrgang automatisch auswählt und schaltet.

Erfindungsgemäß umfasst die Steuervorrichtung eine Eingabe- Ausgabeeinheit, welche zumindest der Anzeige des nach der Unterbrechung des Antriebsstrangs jeweils ausgewählten Anfahrganges dient. Die Eingabe- Ausgabeeinheit ermöglicht es der Bedienperson auch, die in der elektronischen Schaltvorrichtung hinterlegten Anfahrgänge zu verändern. Das Vorwahlmittel, dessen Betätigung der Auswahl des Anfahrganges dient, wird von der Bedienperson über die Eingabe- Ausgabeeinheit ausgewählt bzw. verändert. Denkbar ist auch, dass die Bedienperson mittels der Eingabe- Ausgabeeinheit einen oder mehrere Fahrgeschwindigkeitsbereiche einstellen bzw. verstellen kann.

Weiterhin wird die eingangs gestellte Aufgabe durch ein Verfahren zum Betreiben eines Antriebsstranges eines Fahrzeugs gemäß dem unabhängigen Anspruch 10 gelöst.

Gemäß dem Anspruch 10 wird ein Verfahren zum Betreiben eines Antriebsstranges eines landwirtschaftlichen Nutzfahrzeugs, vorgeschlagen, mit einer Antriebsmaschine und einem Lastschaltgetriebe mit wenigstens zwei Gruppenschaltstufen, denen jeweils mehrere Lastschaltstufen zugeordnet sind, die durch ein schaltbares Anfahrelement verbunden oder getrennt werden, wobei bei einer Unterbrechung des Antriebsstrangs durch das Anfahrelement bei einem Stillstand des Fahrzeugs ein Anfahrgang vorgegeben wird. Erfindungsgemäß wird das Lastschaltgetriebe durch eine elektronische Schaltvorrichtung angesteuert, wobei in der Schaltvorrichtung mindestens zwei schaltbare Anfahrgänge änderbar hinterlegt werden und die Anfahrgänge durch eine Betätigung genau eines Vorwahlmittels ausgewählt werden. Statt technischer Mittel zur Bestimmung der Fahrzeugmasse und der Fahrwegsteigung bzw. zur Ladungserkennung, wie sie im Stand der Technik notwendig sind, ermöglicht es das erfindungsgemäße Verfahren durch eine änderbare Hinterlegung von zumindest zwei Anfahrgängen, die durch eine Betätigung genau eines Vorwahlmittels ausgewählt werden können, schnell, unkompliziert und mit geringem technischen Aufwand auf eine geänderte Fahrsituation reagieren zu können.

Erfindungsgemäß ist eine Steuerungsvorrichtung vorgesehen, mittels der die in der Schaltvorrichtung hinterlegten Anfahrgänge manipulierbar sind, wobei die Steuerungsvorrichtung eine Eingabe- Ausgabeeinheit umfasst, welche zumindest der Anzeige des nach der Unterbrechung des Antriebsstrangs jeweils ausgewählten Anfahrganges dient und dass das Vorwahlmittel, dessen Betätigung der Auswahl des Anfahrganges dient, von einer Bedienperson über die Eingabe- Ausgabeeinheit ausgewählt bzw. verändert wird.

Dabei kann die Auswahl eines der hinterlegten Anfahrgänge durch eine manuelle Betätigung des Vorwahlmittels durchgeführt werden. Die Bedienperson kann durch die manuelle Betätigung eines als Bedienelement ausgeführten Vorwahlelements einen Anfahrgang aus den hinterlegten Anfahrgängen auswählen, wobei die Betätigung des Vorwahlmittels per Hand oder Fuß erfolgen kann. Bei einem per Fuß betätigbaren Vorwahlmittel kann es sich bevorzugt um eines der Fahrpedale des Fahrzeugs handeln. Die Betätigung des entsprechenden Fahrpedals kann der Beschleunigung oder Verzögerung des Fahrzeugs dienen. Zur Bestimmung des auszuwählenden Anfahrganges kann die Betätigung des Fahrpedals in der Weise sensorisch erfasst werden, dass Verstellwinkel und/oder Verstellgeschwindigkeit erfasst und ausgewertet werden. In Abhängigkeit vom Verstellwinkel und/oder der Verstellgeschwindigkeit bei der Betätigung kann auf den auszuwählenden Anfahrgang geschlossenen werden. Ein per Hand betätigbares Vorwahlelement kann ein Bedienelement sein, welches als ein Bedienschalter oder als ein Fahrhebel des Fahrzeugs ausgeführt ist.

Alternativ kann die Auswahl eines der hinterlegten Anfahrgänge in Abhängigkeit von zumindest einem Betriebsparameter des Antriebsstranges durchgeführt werden. Auf diese Weise kann die Auswahl des Anfahrganges aus der hinterlegten Auswahl automatisch durchgeführt werden. Die automatische Auswahl kann durch die Bedienperson des Fahrzeugs deaktiviert werden. Insbesondere kann ein Betriebsparameter ein auswählbarer Fahrgeschwindigkeitsbereich des Fahrzeugs sein. Bevorzugt können mehrere Fahrgeschwindigkeitsbereiche durch die Bedienperson individuell vorgegeben werden. Hierzu kann mittels einer Steuerungsvorrichtung des Fahrzeugs die Vorgabe von mehreren Fahrgeschwindigkeitsbereichen durchgeführt werden.

Die vorliegende Erfindung wird nachstehend anhand eines in den Zeichnungen dargestellten Ausführungsbeispieles näher erläutert.

Es zeigen:
- Fig. 1: eine schematische Darstellung eines als Traktor ausgeführten Fahrzeug; und
- Fig. 2: eine schematische Teildarstellung eines Antriebsstrangs des Fahrzeugs.

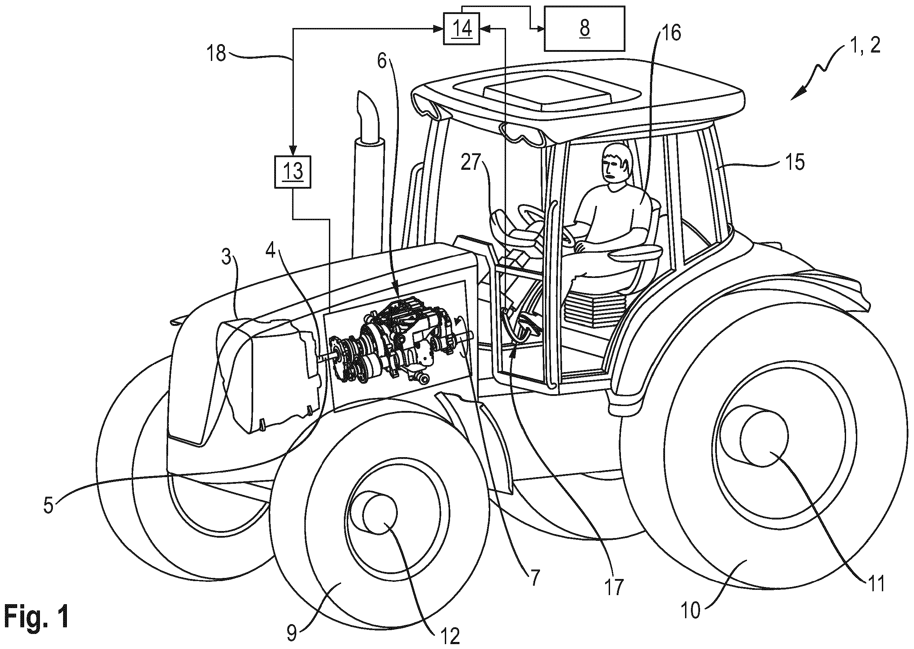

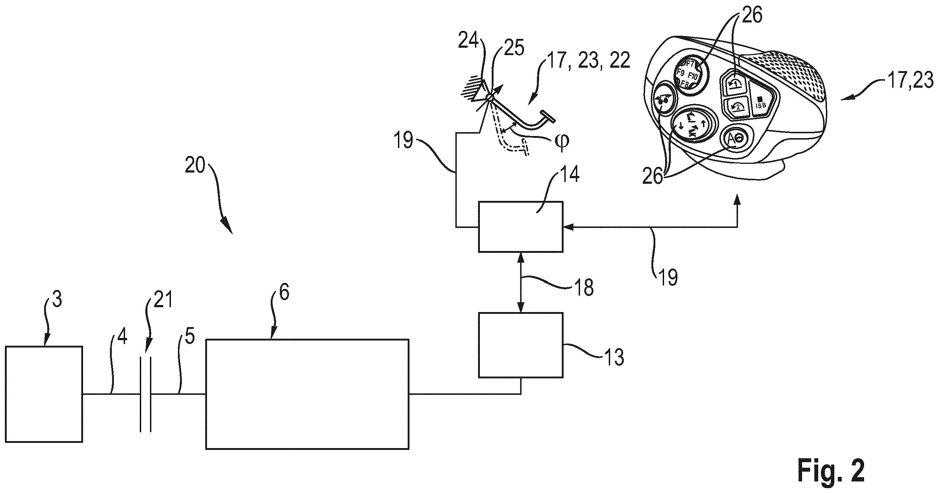

Fig. 1 zeigt ein als landwirtschaftliches Nutzfahrzeug, hier Traktor 2, ausgeführtes Fahrzeug 1 mit einer in seinem frontseitigen Bereich angeordneten, als Verbrennungsmotor ausgeführten, Antriebsmaschine 3, deren Abtriebswelle 4 mit der Eingangswelle 5 eines Lastschaltgetriebes 6 durch ein Anfahrelement 21 gekoppelt ist. Das Lastschaltgetriebe 6 umfasst wenigstens zwei Gruppenschaltstufen, denen jeweils mehrere Lastschaltstufen zugeordnet sind. Die Abtriebswelle 7 des Lastschaltgetriebes 6 ist mit den Laufrädern 9, 10 der Hinterachse 11 und/oder Vorderachse 12 des Fahrzeugs 1 verbunden. Die Antriebsmaschine 3, ein Anfahrelement 21 und das Lastschaltgetriebe 6 bilden einen Teil eines Antriebsstrangs 20, wie er in Fig. 2 schematisch angedeutet ist.

Das Lastschaltgetriebe 6 verfügt über eine elektronische Schaltvorrichtung 13, nachfolgend auch als Getriebesteuergerät bezeichnet, zur Ansteuerung von mechanischen und hydraulischen Komponenten des Lastschaltgetriebes 6. Das Getriebesteuergerät 13 steht drahtlos oder leitungsbasiert durch ein Kommunikationsmittel 18 in Kommunikationsverbindung mit einer dem Fahrzeug 1 zugeordneten, bevorzugt in einer Fahrzeugkabine 15 angeordneten, Steuerungsvorrichtung 14 in Verbindung, welche zur Steuerung verschiedenster, unter anderem fahrzeugseitiger, Funktionen vorgesehen ist. In der Fahrzeugkabine 15 des Fahrzeugs 1 befindet sich eine Bedienperson 16, welche die noch näher zu beschreibende Ansteuerung des Lastschaltgetriebes 6 mittels einer Betätigung genau eines Vorwahlmittels 17 bewirkt. Die Steuerungsvorrichtung 14 umfasst eine Eingabe- Ausgabeeinheit 8, welche der Anzeige und Eingabe von Daten dient.

In Fig. 2 ist eine schematische Teildarstellung eines Antriebsstrangs 20 des Fahrzeugs 1 gezeigt. Die Trennung und die Wiederherstellung der Verbindung zwischen der Antriebsmaschine 3 und dem Lastschaltgetriebe 6 wird durch das zwischen der Antriebsmaschine 3 und dem Lastschaltgetriebe 6 sitzende Anfahrelement 21 vollzogen. Bei dem Anfahrelement 21 kann es sich um eine Trennkupplung handeln, durch die die mechanische Verbindung zwischen der Antriebsmaschine 3 und dem Lastschaltgetriebe 6 im geöffneten Zustand unterbrochen wird. Die Trennkupplung kann dabei als trockenlaufende oder auch als nasslaufende Reibungskupplung vorliegen.

Das Vorwahlmittel 17 kann als ein manuell betätigbares Bedienelement 23 ausgebildet sein, welches als Fahrpedal 22, Fahrhebel oder als Bedienelement 26 ausgeführt sein kann. Das Fahrpedal 22 ist durch ein Drehgelenk 24 schwenkbeweglich am Rahmen der Fahrzeugkabine 15 angelenkt. Um die jeweilige Position des Fahrpedals 22 zu sensieren, ist dem Drehgelenk 24 im einfachsten Fall ein Drehpotentiometer 25 zugeordnet, dessen positionsabhängig generiertes Spannungssignal an die Steuerungsvorrichtung 14 zur Auswertung übergeben wird. Hierzu steht das Drehpotentiometer 25 durch ein Kommunikationsmittel 19 mit der Steuerungsvorrichtung 14 in Verbindung. Aus dem Spannungssignal kann der relative Anteil eines maximal zurücklegbaren Verstellweges ϕ des Fahrpedals 22 bestimmt werden.

Das als Bedienelement 23 ausgeführte Vorwahlmittel 17 ist im dargestellten Ausführungsbeispiel ein Multifunktionsgriff, an welchem zusätzliche Bedienelemente 26 in Form von Schaltern und/oder Tastern angeordnet sind. Zumindest einem der Bedienelemente 26 sind in Abhängigkeit von einer spezifischen Fahrsituation unterschiedliche Funktionen zugewiesen. Diese Funktionen lassen sich mittels der Steuerungsvorrichtung 14 verändern. Hierzu steht das Bedienelement 23 durch ein Kommunikationsmittel 19 mit der Steuerungsvorrichtung 14 in Verbindung.

Ein weiteres Vorwahlmittel 17 kann ein an einer Bedienkonsole 27 in der Fahrzeugkabine 15 angeordnetes - nicht dargestelltes - Bedienelement sein.

Die Bedienperson 16 kann genau ein Vorwahlmittel 17 bestimmen, dessen Betätigung der Auswahl von zumindest zwei in der elektronischen Schaltvorrichtung 13 hinterlegten, insbesondere elektrisch, schaltbaren Anfahrgängen dient.

Wird der Antriebsstrang 20 durch eine Betätigung des Anfahrmittels 21 unterbrochen und wird der Stillstand des Fahrzeugs 1 detektiert, so ist es für einen nachfolgenden Anfahrvorgang erforderlich, einen geeigneten Anfahrgang vorzugeben. Der Anfahrvorgang muss der jeweiligen Betriebssituation angepasst sein, um kritische Fahrsituationen zu vermeiden. Erfindungsgemäß soll die Bedienperson 16 die Möglichkeit erhalten, aus einer Auswahl von zumindest zwei Anfahrgängen gezielt auswählen zu können. Hierzu wird das Lastschaltgetriebe 6 durch die elektronische Schaltvorrichtung 13 angesteuert, wobei in der Schaltvorrichtung 13 mindestens zwei, insbesondere elektrisch, schaltbare Anfahrgänge änderbar hinterlegt werden und die Anfahrgänge durch eine Betätigung genau eines Vorwahlmittels 17 ausgewählt werden.

Hierzu werden mittels der Steuerungsvorrichtung 14 dem genau einen Vorwahlmittel 17, welches eines der programmierbaren Bedienelemente 26 ist, zumindest zwei zusätzliche Funktionen zur Auswahl eines Anfahrgangs zugewiesen, die jedoch nur bei Stillstand des Fahrzeugs 1 als spezifische Fahrsituation verfügbar sind, um Fehlbedienungen zu vermeiden. So kann beispielsweise bei einem als Taster ausgeführten Bedienelement 26 die Auswahl des jeweiligen Anfahrganges durch die Wiederholfrequenz bestimmt werden. Bei einer einfachen Betätigung des Bedienelementes wird der erste hinterlegte Anfahrgang ausgewählt. Bei einer zweifachen Betätigung des Bedienelementes wird der zweite hinterlegte Anfahrgang ausgewählt, usw. Bei einem als Wippschalter oder Kippschalter ausgeführten Bedienelement 26 kann die Auswahl des jeweiligen Anfahrganges durch die jeweilige Schaltstellung bestimmt werden. D.h., das als Wippschalter oder Kippschalter ausgeführte Bedienelement 26 weist zumindest zwei oder mehr Schaltstellungen auf, denen jeweils ein Anfahrgang zugeordnet ist.

Ein Wesentlicher Aspekt ist dabei, dass die Bedienperson 16 die zumindest zwei Anfahrgänge, die in der elektronischen Schaltvorrichtung 13 hinterlegt werden, individuell festlegen kann. Die Bedienperson 16 kann in Kenntnis der während einer Betriebsfahrt auftretenden Fahrsituationen die für sie relevanten Anfahrgänge vorab festlegen. Die gezielte Auswahl eines Anfahrganges aus der Auswahl an hinterlegten Anfahrgängen erfolgt durch eine manuelle Betätigung des genau einen als Bedienelement 22, 23, 26 ausgeführten Vorwahlmittels 17.

Wird als Vorwahlmittel 17 das Fahrpedal 22 verwendet, so wird in Abhängigkeit von dem mittels des Drehpotentiometers 25 bestimmten relativen Anteil des maximal zurücklegbaren Verstellweges ϕ des Fahrpedals 22 der damit korrespondierende, in der Schaltvorrichtung 13 hinterlegte Anfahrgang ausgewählt. Wird das Fahrpedal 22 nur bis zur Hälfte des maximal zurücklegbaren Verstellweges ϕ betätigt, kann ein erster Anfahrgang ausgewählt werden, während beispielsweise bei einem vollständigen Durchtreten des Fahrpedals 22 ein zweiter Anfahrgang aus den in der Schaltvorrichtung 13 hinterlegten Anfahrgängen ausgewählt wird. Eine Zwischenstufe für die Auswahl eines dritten Anfahrganges ist ebenfalls denkbar.

Die Auswahl eines der in der Schaltvorrichtung 13 veränderbar hinterlegten Anfahrgänge kann auch in Abhängigkeit von zumindest einem Betriebsparameter des Antriebsstranges 20 selbst erfolgen. Bevorzugt ist ein Betriebsparameter ein von der Bedienperson 16 auswählbarer Fahrgeschwindigkeitsbereich. Jedem Fahrgeschwindigkeitsbereich ist ein Vorwärtsgang und ein Rückwärtsgang als auswählbarer Anfahrgang zugeordnet. Beispielsweise sind drei Fahrtgeschwindigkeitsbereiche definierbar, welche die Bedienperson 16 ebenfalls mittels der Steuerungsvorrichtung 14 vorgeben kann. Bei einem Einsatz eines Traktors 2 werden Fahrgeschwindigkeitsbereiche benötigt, die vom jeweiligen Einsatzzweck abhängig sind. So kann ein Fahrgeschwindigkeitsbereich mit einer Geschwindigkeit von 20 bis 300 Metern je Stunde im Einsatz mit Straßenbaufräsen bzw. bei Sonderkulturen zur Anwendung kommen. Ein weiterer Fahrgeschwindigkeitsbereich liegt zwischen 3 bis 10 km/h für typische landwirtschaftliche Arbeiten wie Bodenbearbeitung, Fütterung, Dünge- und Pflanzenschutz-Einsätze. Des Weiteren kann ein nächsthöherer Fahrgeschwindigkeitsbereich zwischen 11 bis 20 km/h für leichte Bodenbearbeitung, Mahd oder dergleichen liegen. Ein Geschwindigkeitsbereich größer 20 km/h kommt in der Regel bei der Straßenfahrt mit oder ohne Transportwagen zum Tragen.

Die Bedienperson 16 kann mittels der Steuerungsvorrichtung 14 die jeweilige Intervallgröße der Fahrgeschwindigkeitsbereiche bestimmen und vorgeben. Durch die Betätigung des genau einen Vorwahlmittels 17 wählt die Bedienperson 16 den jeweiligen Fahrgeschwindigkeitsbereich aus. Bevorzugt erfolgt die Auswahl des Fahrgeschwindigkeitsbereichs mittels eines der Bedienelemente 23. Der für diesen Fahrgeschwindigkeitsbereich optimale Anfahrgang wird dann von der elektronischen Schaltvorrichtung 13 bestimmt und automatisch ausgewählt. Da die Auswahl des Fahrgeschwindigkeitsbereichs durch die Bedienperson 16 in der Regel unter Berücksichtigung der vorherrschenden Betriebsbedingungen erfolgt, kann auf eine zusätzliche Sensierung von Lasten, beispielsweise das Vorhandensein eines Transportwagens und dessen Beladungszustand, oder dergleichen, die das Anfahrverhalten beeinflussen, verzichtet werden.

### Bezugszeichenliste

- 1: Fahrzeug
- 2: Traktor
- 3: Antriebsmaschine
- 4: Abtriebswelle
- 5: Eingangswelle
- 6: Lastschaltgetriebe
- 7: Abtriebswelle
- 8: Eingabe-Ausgabeeinheit
- 9: Laufrad
- 10: Laufrad
- 11: Hinterachse
- 12: Vorderachse
- 13: Schaltvorrichtung
- 14: Steuerungsvorrichtung
- 15: Fahrzeugkabine
- 16: Bedienperson
- 17: Vorwahlmittel
- 18: Kommunikationsmittel
- 19: Kommunikationsmittel
- 20: Antriebsstrang
- 21: Anfahrelement
- 22: Fahrpedal
- 23: Bedienelement
- 24: Drehgelenk
- 25: Potentiometer
- 26: Bedienelement
- 27: Bedienkonsole
- ϕ: Verstellweg

## Patentansprüche

1. Antriebsstrang (20) eines landwirtschaftlichen Nutzfahrzeugs (1, 2), mit einer Antriebsmaschine (3) und einem Lastschaltgetriebe (6) mit wenigstens zwei Gruppenschaltstufen, denen jeweils mehrere Lastschaltstufen zugeordnet sind, die durch ein schaltbares Anfahrelement (21) verbindbar oder trennbar sind, wobei bei einer Unterbrechung des Antriebsstrangs (20) durch das Anfahrelement (21) eine Vorgabe eines Anfahrganges nur bei Stillstand des Fahrzeugs (1, 2) erfolgt, wobei eine elektronische Schaltvorrichtung (13) zur Ansteuerung des Lastschaltgetriebes (6) vorgesehen ist, wobei in der Schaltvorrichtung (13) mindestens zwei schaltbare Anfahrgänge änderbar hinterlegt sind, **dadurch gekennzeichnet, dass** die mindestens zwei schaltbaren Anfahrgänge mittels einer Betätigung genau eines Vorwahlmittels (17) auswählbar sind, wobei eine Steuerungsvorrichtung (14) vorgesehen ist, mittels der die in der Schaltvorrichtung (13) hinterlegten Anfahrgänge manipulierbar sind, wobei die Steuerungsvorrichtung (14) eine Eingabe- Ausgabeeinheit (8) umfasst, welche zumindest der Anzeige des nach der Unterbrechung des Antriebsstrangs (20) jeweils ausgewählten Anfahrganges dient und dass das Vorwahlmittel (17), dessen Betätigung der Auswahl des Anfahrganges dient, von einer Bedienperson über die Eingabe- Ausgabeeinheit (8) ausgewählt bzw. verändert wird.

2. Antriebsstrang (20) nach Anspruch 1, **dadurch gekennzeichnet, dass** die Auswahl eines der hinterlegten Anfahrgänge durch eine manuelle Betätigung eines als Bedienelement (23) ausgeführten Vorwahlmittels (17) erfolgt.

3. Antriebsstrang (20) nach Anspruch 2, **dadurch gekennzeichnet, dass** das Bedienelement (23) ein Bedienschalter (26), ein Fahrhebel oder ein Fahrpedal (22) des Fahrzeugs (1, 2) ist.

4. Antriebsstrang (20) nach Anspruch 3, **dadurch gekennzeichnet, dass** der Fahrhebel als sogenannter Multifunktionshebel ausgeführt ist, an welchem zusätzliche Bedienelemente in Form von Schaltern und/oder Tastern angeordnet sind.

5. Antriebsstrang (20) nach Anspruch 4, **dadurch gekennzeichnet, dass** eines der zusätzlichen Bedienelemente (26) des als Multifunktionshebel ausgeführten Fahrhebels mit zumindest zwei unterschiedlichen Funktionen belegt sein, die jeweils nur in spezifischen Fahrsituationen zur Verfügung stehen, wobei eine spezifische Fahrsituation der Stillstand des Fahrzeugs (1, 2) ist, aus welchem angefahren werden soll.

6. Antriebsstrang (20) nach Anspruch 1, **dadurch gekennzeichnet, dass** die Auswahl eines der hinterlegten Anfahrgänge in Abhängigkeit von zumindest einem Betriebsparameter des Antriebsstranges (20) erfolgt.

7. Antriebsstrang (20) nach Anspruch 6, **dadurch gekennzeichnet, dass** ein Betriebsparameter ein auswählbarer Fahrgeschwindigkeitsbereich ist.

8. Antriebsstrang (20) nach Anspruch 7, **dadurch gekennzeichnet, dass** zumindest zwei Fahrgeschwindigkeitsbereiche auswählbar sind.

9. Antriebsstrang (20) nach Anspruch 7 oder 8, **dadurch gekennzeichnet, dass** jedem Fahrgeschwindigkeitsbereich ein Vorwärtsgang und ein Rückwärtsgang als auswählbarer Anfahrgang zugeordnet ist.

10. Verfahren zum Betreiben eines Antriebsstranges (20) eines landwirtschaftlichen Nutzfahrzeugs (1, 2), mit einer Antriebsmaschine (3) und einem Lastschaltgetriebe (6) mit wenigstens zwei Gruppenschaltstufen, denen jeweils mehrere Lastschaltstufen zugeordnet sind, die durch ein schaltbares Anfahrelement (21) verbunden oder getrennt werden, wobei bei einer Unterbrechung des Antriebsstrangs (20) durch das Anfahrelement (21) ausgehend vom Stillstand des Fahrzeugs (1, 2) ein Anfahrgang vorgegeben wird, wobei das Lastschaltgetriebe (6) durch eine elektronische Schaltvorrichtung (13) angesteuert wird, wobei in der Schaltvorrichtung (13) mindestens zwei schaltbare Anfahrgänge änderbar hinterlegt werden, **dadurch gekennzeichnet, dass** die mindestens zwei schaltbaren Anfahrgänge durch eine einzelne Betätigung genau eines Vorwahlmittels (17) ausgewählt werden, wobei eine Steuerungsvorrichtung (14) vorgesehen ist, mittels der die in der Schaltvorrichtung (13) hinterlegten Anfahrgänge manipulierbar sind, wobei die Steuerungsvorrichtung (14) eine Eingabe- Ausgabeeinheit (8) umfasst, welche zumindest der Anzeige des nach der Unterbrechung des Antriebsstrangs (20) jeweils ausgewählten Anfahrganges dient und dass das Vorwahlmittel (17), dessen Betätigung der Auswahl des Anfahrganges dient, von einer Bedienperson über die Eingabe- Ausgabeeinheit (8) ausgewählt bzw. verändert wird.

11. Verfahren nach Anspruch 10, **dadurch gekennzeichnet, dass** die Auswahl eines der hinterlegten Anfahrgänge durch eine manuelle Betätigung des Vorwahlmittels (17) durchgeführt wird.

12. Verfahren nach Anspruch 10 oder 11, **dadurch gekennzeichnet, dass** die Auswahl eines der hinterlegten Anfahrgänge in Abhängigkeit von zumindest einem Betriebsparameter des Antriebsstranges (20) durchgeführt wird.

## Claims

1. A drive train (20) for an agricultural utility vehicle (1, 2), with a propulsion engine (3) and a power shift transmission (6) with at least two group shift stages each being associated with a plurality of power shift stages which can be engaged or disengaged by means of a selectable startup element (21) wherein, when the drive train (20) is interrupted by means of the startup element (21), provision of a start-up gear only occurs when the vehicle (1, 2) is at a standstill, wherein
an electronic gear shift device (13) is provided in order to control the power shift transmission (6), wherein at least two selectable startup gears are modifiably stored in the gear shift device (13), **characterized in that** the at least two selectable startup gears can be selected by actuating exactly one preselection means (17), wherein a control device (14) is provided by means of which the startup gears stored in the gear shift device (13) can be manipulated, wherein the control device (14) comprises an input/output unit (8) which serves at least to display the respective startup gear selected following interruption of the drive train (20) and **in that** the preselection means (17) the actuation of which serves to select the startup gear is selected or modified by an operative via the input/output unit (8).

2. The drive train (20) according to claim 1, **characterized in that** the selection of one of the stored startup gears is made by means of a manual actuation of a preselection means (17) configured as an operating element (23).

3. The drive train (20) according to claim 2, **characterized in that** the operating element (23) is an operating switch (26), a throttle lever or a throttle pedal (22) of the vehicle (1, 2).

4. The drive train (20) according to claim 3, **characterized in that** the throttle lever is configured as what is known as a multifunctional lever on which additional operating elements in the form of switches and/or buttons are disposed.

5. The drive train (20) according to claim 4, **characterized in that** one of the additional operating elements (26) of the throttle lever configured as a multifunctional lever is provided with at least two different functions which respectively are only available in specific drive situations, wherein one specific drive situation is the vehicle (1, 2) at a standstill from which startup is to be made.

6. The drive train (20) according to claim 1, **characterized in that** the selection of one of the stored startup gears is carried out as a function of at least one operating parameter of the drive train (20).

7. The drive train (20) according to claim 6, **characterized in that** an operating parameter is a selectable drive speed range.

8. The drive train (20) according to claim 7, **characterized in that** at least two drive speed ranges can be selected.

9. The drive train (20) according to claim 7 or claim 8, **characterized in that** a forward gear and a reverse gear are associated with each drive speed range as the selectable startup gear.

10. A method for operating a drive train (20) for an agricultural utility vehicle (1, 2) with a propulsion engine (3) and a power shift transmission (6) with at least two group shift stages each being associated with a plurality of power shift stages which are engaged or disengaged by means of a selectable startup element (21) wherein, when the drive train (20) is interrupted by means of the startup element (21) proceeding from when the vehicle (1, 2) is at a standstill, a startup gear is specified, wherein the power shift transmission (6) is controlled by means of an electronic gear shift device (13), wherein at least two selectable startup gears are modifiably stored in the gear shift device (13), **characterized in that** the at least two selectable startup gears are selected by a single actuation of exactly one preselection means (17), wherein a control device is provided by means of which the startup gears stored in the gear shift device (13) can be manipulated, wherein the control device (14) comprises an input/output unit (8) which serves at least to display the respective startup gear selected following interruption of the drive train (20) and **in that** the preselection means (17) the actuation of which serves to select the startup gear is selected or modified by an operative via the input/output unit (8).

11. The method according to claim 10, **characterized in that** the selection of one of the stored startup gears is carried out by means of a manual actuation of the preselection means (17).

12. The method according to claim 10 or claim 11, **characterized in that** the selection of one of the stored startup gears is carried out as a function of at least one operating parameter of the drive train (20).

## Revendications

1. Chaîne de transmission (20) d'un véhicule utilitaire agricole (1, 2) comprenant une machine d'entraînement (3) et une transmission commandée en charge (6) avec au moins deux étages de transmission groupés auxquels sont respectivement associés plusieurs rapports sous charge qui peuvent être reliés ou séparés par l'intermédiaire d'un élément de démarrage commandable (21), en cas d'interruption de la chaîne de transmission (20) une prescription du rapport de démarrage par l'intermédiaire de l'élément de démarrage (21) n'intervenant qu'à l'arrêt du véhicule (1, 2), un dispositif électronique de commutation (13) étant prévu pour commander la transmission commandée en charge, dans le dispositif de commutation (13) étant enregistrés au moins deux rapports de démarrage commandables, **caractérisée en ce que** les au moins deux rapports de démarrage commandables sont sélectionnables par l'intermédiaire d'un actionnement exactement d'un moyen de présélection (17), un dispositif de commande (14) étant prévu au moyen duquel les rapports de démarrage enregistrés dans le dispositif de commutation (13) sont modifiables, le dispositif de commande (14) incluant une unité d'entrée/sortie (8) qui sert au moins à afficher le rapport de démarrage respectivement sélectionné après l'interruption de la chaîne de transmission (20), et **en ce que** le moyen de présélection (17), dont l'actionnement sert à sélectionner le rapport de démarrage, est sélectionné, respectivement modifié par une personne utilisatrice par l'intermédiaire de l'unité d'entrée/sortie (8).

2. Chaîne de transmission (20) selon la revendication 1, **caractérisée en ce que** la sélection d'un des rapports de démarrage enregistrés s'effectue par l'intermédiaire d'un actionnement manuel d'un moyen de présélection (17) conformé en élément d'utilisation (23).

3. Chaîne de transmission (20) selon la revendication 2, **caractérisée en ce que** l'élément d'utilisation (23) est un commutateur d'utilisation (26), un levier d'avancement ou une pédale d'avancement (22) du véhicule (1, 2).

4. Chaîne de transmission (20) selon la revendication 3, **caractérisée en ce que** le levier d'avancement est conformé en levier dit multifonctionnel sur lequel sont disposés des éléments d'utilisation supplémentaires en forme de commutateurs et/ou d'interrupteurs.

5. Chaîne de transmission (20) selon la revendication 4, **caractérisée en ce qu'**un des éléments d'utilisation supplémentaires (26) du levier d'avancement conformé en levier multifonctionnel être doté d'au moins deux fonctions différentes qui ne sont respectivement disponibles que dans des situations de marche spécifiques, une situation de marche spécifique étant l'arrêt du véhicule (1, 2) à partir duquel celui-ci doit être démarré.

6. Chaîne de transmission (20) selon la revendication 1, **caractérisée en ce que** la sélection d'un des rapports de démarrage enregistrés s'effectue en fonction d'au moins un paramètre de fonctionnement de la chaîne de transmission (20).

7. Chaîne de transmission (20) selon la revendication 6, **caractérisée en ce qu'**un paramètre de fonctionnement est une plage de vitesses de marche sélectionnable.

8. Chaîne de transmission (20) selon la revendication 7, **caractérisée en ce qu'**au moins deux plages de vitesses de marche sont sélectionnables.

9. Chaîne de transmission (20) selon la revendication 7 ou 8, **caractérisée en ce qu'**à chaque plage de vitesses de marche est associée, à titre de rapport de démarrage sélectionnable, une vitesse en marche avant et une vitesse en marche arrière

10. Procédé de fonctionnement d'une chaîne de transmission (20) d'un véhicule utilitaire agricole (1, 2), comprenant une machine d'entraînement (3) et une transmission commandée en charge (6) avec au moins deux étages de transmission groupés auxquels sont respectivement associés plusieurs rapports sous charge qui sont reliés ou séparés par l'intermédiaire d'un élément de démarrage commandable (21), en cas d'interruption de la chaîne de transmission (20) un rapport de démarrage étant prescrit par l'intermédiaire de l'élément de démarrage (21) à partir de l'arrêt du véhicule (1, 2), la transmission commandée en charge (6) étant commandée par l'intermédiaire d'un dispositif électronique de commutation (13), au moins deux rapports de démarrage commandables étant enregistrés de manière modifiable dans le dispositif de commutation (13), **caractérisé en ce que** les au moins deux rapports de démarrage commandables sont sélectionnés par l'intermédiaire d'un actionnement unique exactement d'un moyen de présélection (17), un dispositif de commande (14) étant prévu au moyen duquel les rapports de démarrage enregistrés dans le dispositif de commutation (13) sont modifiables, le dispositif de commande (14) incluant une unité d'entrée/sortie (8) qui sert au moins à afficher le rapport de démarrage respectivement sélectionné après l'interruption de la chaîne de transmission (20), et **en ce que** le moyen de présélection (17), dont l'actionnement sert à sélectionner le rapport de démarrage, est sélectionné, respectivement modifié par une personne utilisatrice par l'intermédiaire de l'unité d'entrée/sortie (8).

11. Procédé selon la revendication 10, **caractérisé en ce que** la sélection d'un des rapports de démarrage enregistrés s'effectue par l'intermédiaire d'un actionnement manuel du moyen de présélection (17).

12. Procédé selon la revendication 10 ou 11, **caractérisé en ce que** la sélection d'un des rapports de démarrage enregistrés s'effectue en fonction d'au moins un paramètre de fonctionnement de la chaîne de transmission (20).
